# EUROPEAN PATENT SPECIFICATION

(11) **EP 4 605 458 B1**
(45) Date of publication and mention of the grant of the patent: **02.12.2026**
(21) Application number: 23790622.7
(22) Date of filing: 16.10.2023
(51) Int. Cl.: C08K 3/22

(54) **STABILIZED POLYETHER-ETHER-KETONE (PEEK) COMPOSITION**
STABILISIERTE POLYETHER-ETHER-KETON (PEEK)-ZUSAMMENSETZUNG
COMPOSITION STABILISÉE DE POLYÉTHER-ÉTHER-CÉTONE (PEEK)

(30) Priority: 17.10.2022 EP 22202027
(43) Date of publication of application: 27.08.2025
(73) Proprietor: Treibacher Industrie AG, 9330 Treibach-Althofen (AT)
(72) Inventor: RACK, Erich, 9100 Völkermarkt (AT)
(74) Representative: Schwarz & Partner Patentanwälte GmbH
(86) International application number: PCT/EP2023/078691
(87) International publication number: WO 2024/083750

(56) References cited:
- WO-A1-2017/199600
- CN-A- 111 269 498
- US-A- 3 925 307
- US-A1- 2020 198 211
- DATABASE CA [online] CHEMICAL ABSTRACTS SERVICE, COLUMBUS, OHIO, US; 12 June 2020 (2020-06-12), XU, XIAOPENG ET AL: "Rare earth composite heat stabilizer and preparation method thereof", XP002808759, retrieved from STN Database accession no. 2020:1130028

## Description

The invention relates to a polymeric composition comprising Polyether-ether-ketone (PEEK) and a rare earth compound. The invention further relates to the use of said rare earth compound as heat stabilizer in a polymeric composition comprising PEEK.

### Background of the invention

Thermoplastic polymers are widely used in engineering. Their suitability for temperature-based reshaping opens up a wide field of wide-spread fabrication methods such as casting, molding, cupping, etc, which are typically way superior in terms of throughput, compared to non-thermal machining. On the flipside, this temperature sensitivity limits the high temperature performance of thermoplasts, especially when exposed to those temperatures for a sustained period of time.

Therefore, a variety of thermo-stabilizing additives is known, which either mechanically reinforce the compound or chemically hinder thermodegradation.

Regarding the latter option, it should be mentioned that a major driver to decreasing mechanical properties upon exposure to elevated temperature over time is a radical-triggered degradation reaction of the polymer chains. To address this issue, both organic and inorganic radical interceptors are used.

Rare-earth elements such as cerium and lanthanum have proven to intercept radicals and thus thermo-stabilize thermoplasts.

For example WO 2021/074178 A1 discloses a thermostabilization effect of both cerium-oxide-hydrate and lanthanum-hydroxide on thermoplastic polyester. This effect is observed in terms of the tensile strength of the thermoplastic polyester on heat aging over an extended period of time.

Other examples in which plastics in general, and thermoplastic polymers in particular, are mixed with additives as stabilizers, fillers, plasticizers and colorants to adapt the properties according to the desired field of application include the following:
The stabilisation of organic polymers against degradation induced by free radicals using cerium dioxide is disclosed in EP 1 832 624 Al, these radicals being mainly derived from UV-radiation, although heat is also mentioned as a possible source. The patent does not disclose the use of lanthanum.

In US 9,969,882 B2 it is described that rare earth compounds, preferably cerium tetrahydroxide and lanthanum trihydroxide are used as inorganic radical interceptors in polyamides for long term heat stabilization at temperatures of at least 180 °C.

CN 106279646 A relates to heat-resistant polybutylene succinate, which comprises a nucleating agent such as, among others, kaolin, mica, titanium dioxide, carbon nanotubes, cyclodextrin or cyclic phosphate lanthane.

US 3 621 074 A discloses a method for polycondensation of a diglycol terephthalate, wherein lanthanum phosphate may be used as a catalyst.

Further documents disclosing the use of especially cerium salts as stabilizers are GB 904,972, EP 3 006 500, WO 2019/191574 A1, CN 110183638 A, KR 20170063159 A, CN 104086877 B, CN 108329573 A, WO 2004/106311, "Plastics Additives Handbook" (H. Zweifel, R. D. Maier, M. Schiller, 6th Edition, Carl Hanser Verlag, Munich, 2009), CN 102775635 A, CN 101200556 B and Yang et al. (2015) Ind. Eng. Chem. Res. 54 (44): 11048-11055.

Polyether-ether ketone (PEEK) is a thermoplastic, semicrystalline polymer with excellent mechanical properties. The structural unit of the monomer of PEEK is as follows:

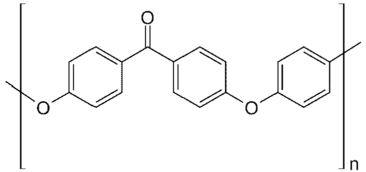

Although the glass transition temperature is appr. 150°C, PEEK is suitable for many high-temperature applications as it maintains much of its mechanical properties at temperatures as high as 200°C - 260°C. The melting point is appr. at 340°C.

Thus, PEEK is a relatively heat resistant thermoplastic polymer by nature. Therefore, someone skilled in the art would not primarily envision the addition of thermostabilizers to PEEK.

US 3,925,307 discloses the addition of antioxidants to Polyarylether ketones. PEEK is not mentioned in this document. This document mentions, inter alia, lanthanum hydroxide (La(OH)₃) and cerium oxide hydroxide (CeO₂.x H₂O) as antioxidants. Heat resistance is observed over a period of only 30 minutes at 400°C, i.e. above the melting point of the polymer. Thus, this document relates to short-term stabilization of the polymer at processing conditions. The document is silent about the long-term stability of PEEK under operating conditions (i.e. elevated temperatures, but below the melting point).

Properties of two commercially available PEEK materials are disclosed in "Victrex® Material Properties Guide" (https://www.victrex.com/- /media/downloads/literature/en/material-properties-guide_us-4-20.pdf, downloaded October 13, 2022) and "KetaSpire® PEEK Design & Processing Guide" (https://content.solvay.com/ketaspire-peek-design-and-processing-guide.pdf; downloaded October 13, 2022).

With regard to long-term stability under thermal stress, according to these publications, PEEK does not show a significant decline in tensile strength of long-time heat-ageing, such as in contrast thereto observed with the thermoplastic polyesters investigated e.g. in WO 2021/074178.

Also, with regard to the maximal elongation at break after long-time heat ageing, according to these publications no significant decline was observed at temperatures in the range of 180°C to 220°C.

These temperatures are below the currently recommended maximum continuous operation temperature of 240°C.

However, it was found that PEEK indeed does exhibit a decline in maximal elongation at break upon long-time heat-ageing at temperatures of 210°C, and especially at temperatures that are closer to 240°C or even higher than 240°C.

Maximal elongation at break is a measure for toughness of a polymer, and thus maintaining this property upon invasive temperature conditions that usually lead to ageing is particularly desirable.

### Short description of the invention

It is the object of the present invention to increase the heat-ageing resistance, especially the long term heat-ageing resistance of Polyether-ether-ketone (PEEK).

The object is solved by a polyether ether ketone (PEEK) composition according to claim 1. Preferred embodiments are set out in the sub-claims.

Furthermore, the invention relates to the use of lanthanum hydroxide for long-term stabilization of a PEEK composition according to claim 4.

### Short description of the drawings

Fig. 1 shows the result of long-time heat ageing of the PEEK composition with regard to tensile strength.
Fig.2 shows the effect of incorporation of cerium oxide hydrate as well as lanthanum hydroxide into PEEK on elongation at break after heat-ageing at 230°C for 500 hours.
Fig. 3 shows the effect of incorporation of lanthanum hydroxide (standard and fine grade) on elongation at break quotient during heat-ageing at 230°C for 500 hours.
Fig. 4 shows the effect of incorporation of lanthanum hydroxide (standard and fine grade) on elongation at break quotient during heat-ageing at 230°C for 3000 hours.
Fig. 5 shows the effect of incorporation of lanthanum hydroxide (standard and fine grade) on elongation at break quotient during heat-ageing at 270°C for 3000 hours.
Fig. 6 shows the effect of incorporation of different lanthanum hydroxide amounts on elongation at break quotient during heat-ageing at 230°C for 500 hours.
Fig. 7 shows the effect of incorporation of different lanthanum hydroxide amounts on elongation at break quotient during heat-ageing at 270°C for 500 hours.
Fig. 8 shows the effect of incorporation of different lanthanum hydroxide amounts on elongation at break quotient during heat-ageing at 230°C for 1500 hours.
Fig. 9 shows the effect of incorporation of different lanthanum hydroxide on elongation at break quotient during heat-ageing at 270°C for 1500 hours.
Fig. 10 compares the effect of incorporation of lanthanum hydroxide (fine grade) on elongation at break quotient during heat-ageing in PEEK, Polybutylenterephthalate (PBT) and Polyamide 66 (PA66) at temperatures above the respective recommended maximum temperature for continuous use.

### Detailed description of the invention

The present invention provides in a first aspect a polyether ether ketone (PEEK)

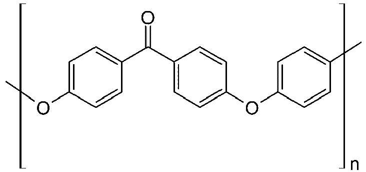

Composition containing lanthanum hydroxide.

The invention furthermore provides in a second aspect the use of lanthanum for long-term stabilization of a PEEK composition over a period of 500 hours or more, preferably 1000 - 3000 hours or more at a temperature of from 210°C to 300°C, preferably 230°C to 270°C.

The following disclosure applies similarly to said first aspect and said second aspect.

Under "PEEK composition", a polymeric composition is to be understood which comprises PEEK to an extent of at least 50%, preferably at least 70%.

As well known to the skilled artisan, polymeric compositions may contain significant amounts of additives such as fillers, binders, or reinforcing materials.

The composition of the present invention may contain PEEK as the sole polymeric matrix-forming component. Especially in the case of composites, polymer compositions may comprise one or more matrix-forming polymeric components, as well as reinforcing materials such as fibers, which may be polymeric as well. In the preferred embodiment of the invention, PEEK is the only polymeric matrix-forming component.

The composition of the present invention especially is or essentially consists of PEEK.

It has surprisingly been found that lanthanum hydroxide (La(OH)₃) has a long-term heat-stabilizing effect on PEEK with regard to the maximum elongation at break.

On the basis of the literature cited above, one can take that the community is largely focussing on Ce- based rather than La-based rare-earth thermostabilizers. The rationale may lie in the remarkable redox properties of cerium-oxide hydrate, with stabile Ce³⁺ and Ce⁴⁺ forms and the well known phenomenon that even the formally tetravalent (oxidized) cerium-(IV)-hydrate more precisely shows a non-stoichiometric Ce(OH)₄₋ₙ formula. Ce also has occupied f-orbitals which can help to better delocalize electrons when intercepting a free radical.

As non of these criteria apply to lanthanum it neither looks straight-forward to apply lanthanum hydroxide as thermostabilizer for PEEK, nor could the expert have anticipated the effect described here.

Even more surprisingly it has been found that other known heat stabilizers, such as especially cerium oxide hydrate, were essentially ineffective to stabilize the maximum elongation at break of PEEK during long-term heat-ageing.

Improved long term heat-ageing resistance in the context of the present invention shall be understood as a reduction of the percental decrease of mechanical property values upon long term heat-ageing at elevated temperature compared to the initial values before said heat-ageing.

Said mechanical property values are preferably Young's modulus, tensile strength and, for the context of the present invention, especially, elongation at break.

Heat-ageing, especially long term heat-ageing, in the context of the present invention shall be understood as being induced by objecting the polymeric composition, i.e. the comprised PEEK polymer, to an elevated temperature.

The elevated temperature is understood to be slightly below the known maximum operation temperature of PEEK and even above this maximum operation temperature. The current known maximum continuous operation temperature for PEEK is 240°C, and is thus below the melting point.

One specific aspect of the present invention is to improve the heat-ageing resistancy of PEEK in a temperature range of 210°C - 300 °C, preferably up to 230°C - 270 °C.

In one embodiment of the invention, the maximum elongation at break after thermal aging in a temperature range of 210°C - 300 °C, preferably up to 230°C - 270 °C, for 500 h - 3000 h or more, preferably 1000 h -3000 h, more preferably 2000 h - 3000 h is increased by the addition of a lanthanum hydroxide.

The PEEK compositions according to the invention surprisingly exhibit a very good heat-ageing, especially against long term heat stress. This effect is due to the lanthanum hydroxide used according to the present invention. Heat-ageing in general is based on a thermo-oxidative degradation mechanism via radical chain reactions. Due to the influence of heat and oxygen, free radicals form within the polymers. It has been found that the lanthanum hydroxide used according to the present invention is capable of improving long-term heat-ageing resistance of PEEK. Such an effect has not been reported before.

Hereinafter, preferred features of the invention are outlined by the embodiments.

The amount of lanthanum hydroxide may range fom 0.05 wt.% up to 20 wt.%. Furthermore, the amount of lanthanum hydroxide may range fom 0.05 wt.% to 10 wt.%. The amount of lathanum hydroxide is preferably from 0.05 wt.% to 5.0 wt.%, more preferably 0.1 wt.% to 5.0 wt.%, most preferred 0.3 wt.% to 5 wt.%, e.g. 0.5 wt.%.

Further amounts can be e.g. 5.0 wt. %, 1.0 wt. %, 0.7 wt. %, 0.3 wt. %, or 0.1 wt. % of lanthanum hydroxide. Preferred amounts of lanthanum hydroxide can also range from 0.1 wt.% to 3.0 wt.%, more preferably 0.3 wt.% to 3 wt.%, most preferred 0.3 wt.% to 0.7 wt.%.

The lanthanum hydroxide has preferably a pH value of 7.5 to 11.5, more preferably of 8.5 to 11.

The lanthanum hydroxide has preferably a specific BET surface of 2 m²/g to 20 m²/g, more preferably of 6 m²/g to 13 m²/g.

The lanthanum hydroxide has preferably a D₅₀ of 0.3 µm to 6.0 µm, more preferably of 0.5 µm to 5.0 µm, further preferably 0.5 µm to 3.5 µm, most preferably 0.5 µm to 1 µm.

It has been found that the effect of lanthanum hydroxide particles with a lower average particle size, especially with a D₅₀ of 0.5 µm to 1 µm is more enhanced as compared with particles having higher average particle size.

All D₅₀ values given herein refer to the volume based representation, i.e. the particle diameter at "x" vol% in the cumulative distribution (e.g. a D₅₀ of at least 1 µm means that 50 vol% of the particles have a smaller diameter than 1 µm).

The lanthanum hydroxide has preferably a LOI of 8.0 % to 15.0 %, more preferably of 10.0 % to 15.0 % and most preferably of 12.0 % to 14.5 %.

In particular the lanthanum hydroxide has all of the above parameters, i.e. specific pH value, BET surface, D₅₀ and LOI.

### Examples

PEEK based moulding compounds are available from several suppliers on the market. In the current examples a moulding compound based on PEEK with medium viscosity suitable for injection moulding process was used (Vestakeep 2000 G, non-reinforced grade; producer EVONIK).

### Incorporation of cerium oxide hydrate (comparison) and lanthanum hydroxide (according to the invention) into PEEK

The incorporation of cerium oxide hydrate and lanthanum hydroxide by gravimetric feeding was done in a separate compounding step by co-rotating twin screw extruder Coperion ZSK 26 Mcc produced by the company Coperion, Stuttgart.

Diameter (D) of the screw was 26 mm and L/D ratio was 48. Vestakeep 2000 G is supplied in pellets and before compounding no conditioning is needed. To achieve a constant mass flow over time of 0,5 wt% for the cerium oxide hydrate or lanthanum hydroxide, a throughput of > 50 kg/h is necessary.

### Materials:

Cerium oxide hydrate: pH 6.8, BET surface 64.7 m²/g, D₅₀ 1.1 µm, LOI 5.5 %
Lanthanum hydroxide: pH 9.6, BET surface 8.2 m²/g, D₅₀ 3.2 µm, LOI 14.2 %
Lanthanum hydroxide "fine": pH 9.8, BET surface 9.7 m²/g, D₅₀ 0.8 µm, LOI 13.6 %

For gravimetric feeding Loss-in-Weight-Brabender dosing units for the basic moulding compound Vestakeep 2000 G and for the cerium oxide hydrate or lanthanum hydroxide were used.

2 devolatilizing openings are available at the twin screw extruder to remove any remaining humidity during the compounding step.

Using a strand cutter cylindrical pellets were manufactured with a diameter of around 2mm and length of 2-5 mm and afterwards used for the production of the test specimen by injection moulding.

The following compounds were used/manufactured:
- Compound A - PEEK Vestakeep 2000 G - injection moulding grade
- Compound B - PEEK Vestakeep 2000 G + 0.5 wt% cerium oxide hydrate
- Compound C - PEEK Vestakeep 2000 G + 0.5 wt% lanthanum hydroxide
- Compound D - PEEK Vestakeep 2000 G + 0.5 wt% lanthanum hydroxide "fine"
- Compound E - PEEK Vestakeep 2000 G + 0.05 wt% lanthanum hydroxide "fine"
- Compound F - PEEK Vestakeep 2000 G + 0.1 wt% lanthanum hydroxide "fine"
- Compound G - PEEK Vestakeep 2000 G + 0.3 wt% lanthanum hydroxide "fine"
- Compound H - PEEK Vestakeep 2000 G + 0.7 wt% lanthanum hydroxide "fine"
- Compound I - PEEK Vestakeep 2000 G + 1.0 wt% lanthanum hydroxide "fine"
- Compound J - PEEK Vestakeep 2000 G + 3.0 wt% lanthanum hydroxide "fine"
- Compound K - PEEK Vestakeep 2000 G + 5.0 wt% lanthanum hydroxide "fine"

Compounding Conditions - ZSK 26 twin screw compounder:
Throughput = 60 kg/h
Speed = 900 rpm

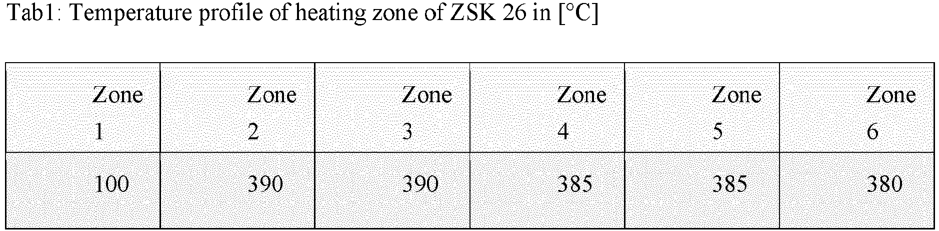

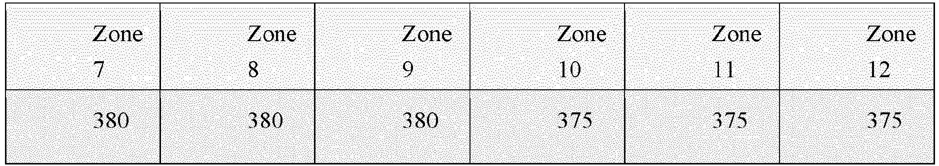

### Incorporation of lanthanum hydroxide into Polyester and Polyamide (Comparison)

Lanthanum hydroxide ("fine") was incorporated into polymer compositions different from PEEK, namely
- Polybutylester (PBT) (PBT Ultradur B 4520, manufacturer: BASF) and
- Polyamid 66 (PA 66) (PA 66 Zytel E 42, manufacturer: DuPont)

The production process was similar to the incorporation into PEEK, however, of course taking into account the possible processing temperatures for these different polymers.

The following compounds were used/manufactured:
- Compound L - PBT Ultradur B 4520 + 0.5 wt% lanthanum hydroxide "fine"
- Compound M - PA 66 Zytel E 42 + 0.5 wt% lanthanum hydroxide "fine"

### Production of test specimen:

### PEEK:

Tensile test rods were manufactured by injection moulding process using the injection moulding machine Engel Victory 330/80 according to DIN EN ISO 527-1. Granules of the compositions (Compound A-D) were dried at 150°C for 6h before injection moulding process.

### PBT/PA66:

Test specimen were manufactured analogous to the specimen for PEEK.

### Heat Ageing:

### PEEK:

The heat ageing process was done in drying ovens at Treibacher Industrie AG. Temperatures defined were 230°C, 270°C and 300°C for 500, 1000, 1500 and 3000h. For 230°C and 270°C a drying oven of the company Heraeus (type: Function line T 5042 EK) and for 300 °C an oven of the company Memmert (type: UF 160) was used.

### PBT:

The heat ageing temperature applied was 170°C (this is above the recommended maximum temperature for continuous use).

### PA 66:

The heat ageing temperature applied was 190°C (this is above the recommended maximum temperature for continuous use).

Mechanical properties of the heat aged test specimen were tested at universal testing machine manufactured by Zwick Z 150 Allround-Linie.

Conditioning of test specimen before mechanical testing after heat aging was performed for 72 h at 80 °C in water.

### Testing conditions:

The tensile tests were carried out according to DIN EN ISO 527. The speed was 1 mm/min until the yield strength and afterwards 50 mm/min until the break. Young's modulus, tensile strength and elongation at break were determined.

### Results:

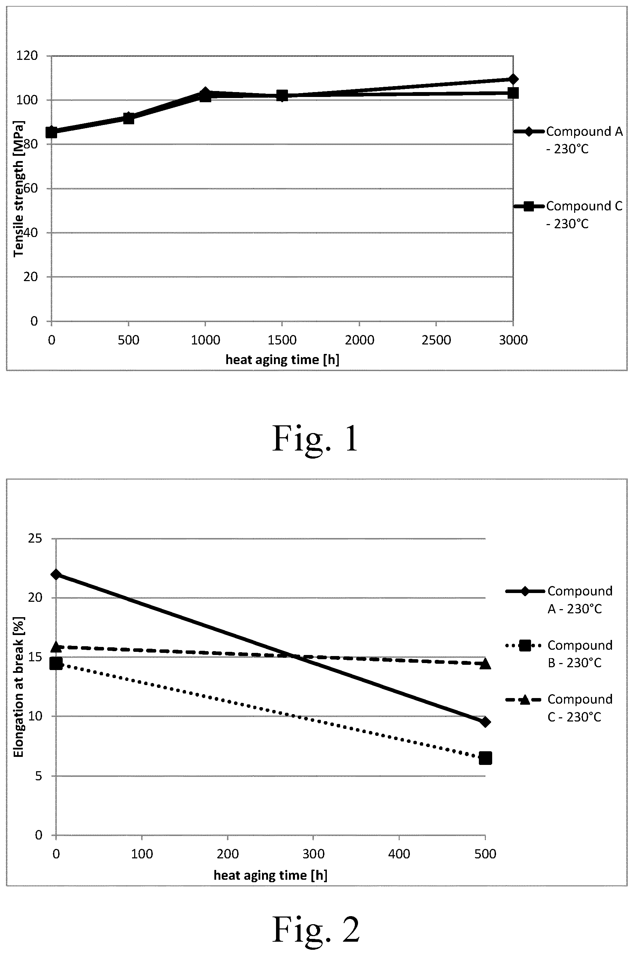

No significant effect of long-time heat ageing on tensile strength of PEEK at temperatures below 240°C: Fig. 1 as well as Table 1 below show the result of long-time heat ageing of the PEEK composition with regard to tensile strength. It can be seen that after a period of 3000 hours at 230°C no significant effect on tensile strength (MPa) can be seen. This applies to both unmodified PEEK (Compound A) as well as the PEEK composition containing lanthanum hydroxide (Compound C).

**Table 1**

| Time (hours) | 0 | 500 | 1000 | 1500 | 3000 |
|---|---|---|---|---|---|
| Compound A - 230°C | 86 | 92 | 104 | 102 | 110 |
| Compound C - 230°C | 85 | 92 | 102 | 102 | 103 |

### Effect of long-time heat ageing on elongation at break of PEEK

Fig.2 as well as Table 2 below show the effect of incorporation of cerium oxide hydrate as well as lanthanum hydroxide into PEEK on elongation at break (%) after heat-ageing at 230°C for 500 hours.

Non-modified PEEK (Compound A) shows a significant decrease in elongation at break after 500 hours / 230°C heat-ageing.

PEEK modified with cerium oxide hydrate (Compound B) shows a significant decrease as well.

However, PEEK modified with lanthanum hydroxide (Compound C) according to the invention showed almost no deterioration in elongation at break.

It is noted that the addition of both cerium oxide hydrate as well as lanthanum hydroxide leads to a decrease of the elongation at break of the initial material. This decrease, however, is tolerable.

**Table 2**

| Time (Hours) | 0 | 500 |
|---|---|---|
| Compound A - 230°C | 22 | 10 |
| Compound B - 230°C | 14 | 7 |
| Compound C - 230°C | 16 | 14 |

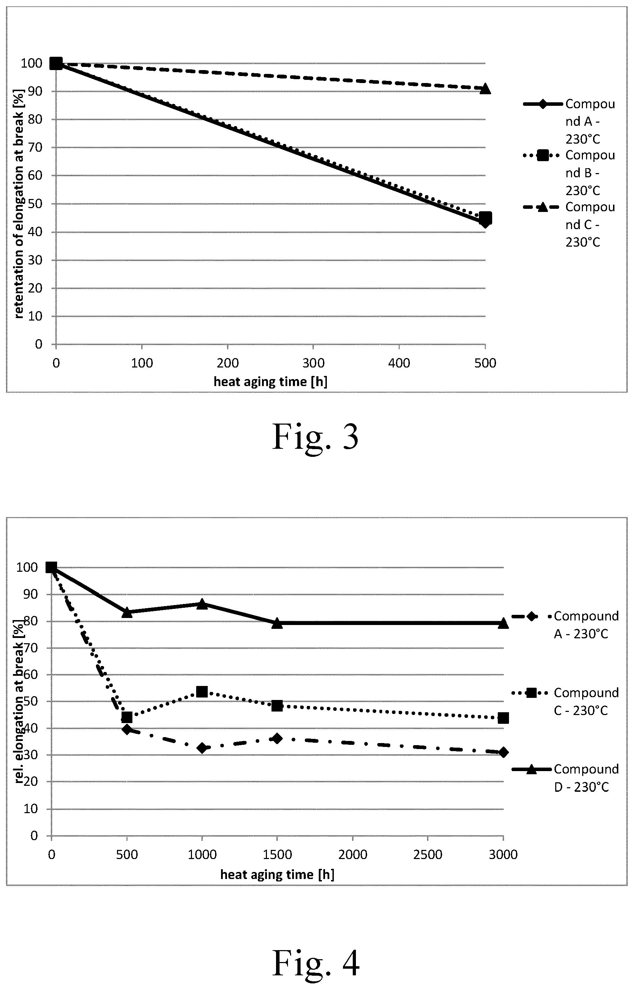

Figure 3 as well as Table 3 show the same results as in Figure 2 on the basis of the elongation at break quotient ("rel. elongation at break", determined as quotient of the elongation at break value before (100 %) and after the end of the heat-ageing).

The surprising effect of lanthanum hydroxide (compound C) as compared with non-modified PEEK (compound A) and PEEK modified with cerium oxide hydrate (Compound B) becomes even more clear here.

It is known to the skilled artisan that it is important for a polymer composition essentially to remain stable in its properties during use with regard to the initial status (i.e. before using).

**Table 3**

| Time (hours) | 0 | 500 |
|---|---|---|
| Compound A - 230°C | 100 | 43 |
| Compound B - 230°C | 100 | 45 |
| Compound C - 230°C | 100 | 91 |

Figures 4 to 5 as well as Table 4 below show the influence of the particle size of the lanthanum hydroxide on the elongation at break quotient. This was tested at three different temperatures: 230°C, 270°C and 300°C and for up to 3000 hours.

For each temperature, unmodified PEEK (compound A) was compared to PEEK modified with lanthanum hydroxide (compound C) and PEEK modified with lanthanum hydroxide "fine" (compound D).

**Table 4**

| Time (hours) | 0 | 500 | 1000 | 1500 | 3000 |
|---|---|---|---|---|---|
| Compound A - 230°C | 100 | 40 | 33 | 36 | 31 |
| Compound C - 230°C | 100 | 44 | 54 | 48 | 44 |
| Compound D - 230°C | 100 | 83 | 87 | 79 | 79 |
| Compound A - 270°C | 100 | 23 | 20 | 11 | 12 |
| Compound C - 270°C | 100 | 49 | 37 | 37 | 31 |
| Compound D - 270°C | 100 | 84 | 61 | 84 | 45 |

For each temperature, a better effect of the "fine" lanthanum hydroxide employed (Compound D) is apparent.

Furthermore, it was found that at very high temperatures (300°C), also a decline in tensile strength of PEEK in the period between 500 and 1000 hours can be observed. It was found that also this decline can be counteracted against by incorporation of lanthanum hydroxide into PEEK.

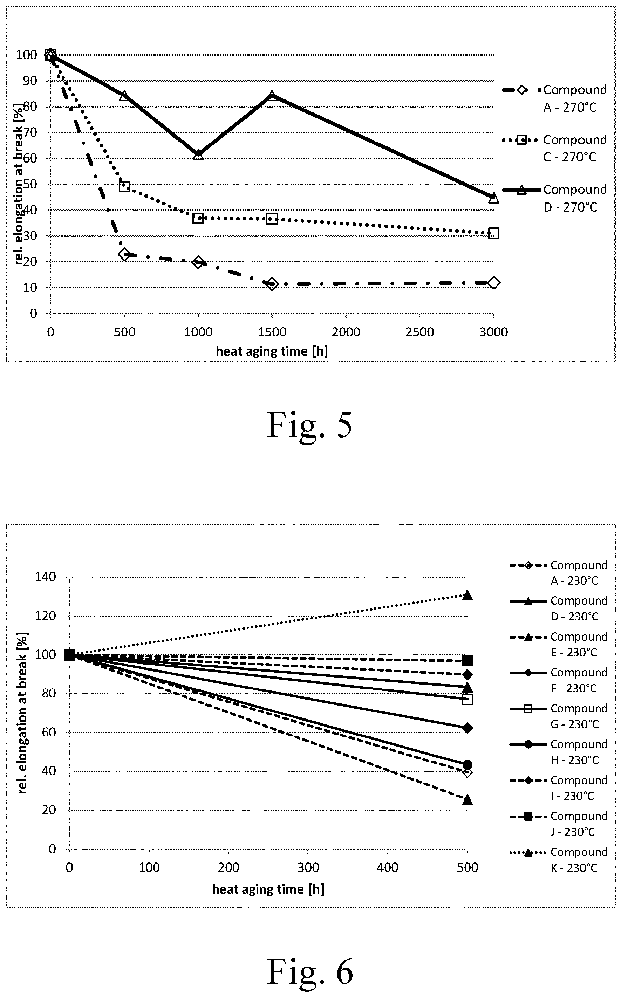

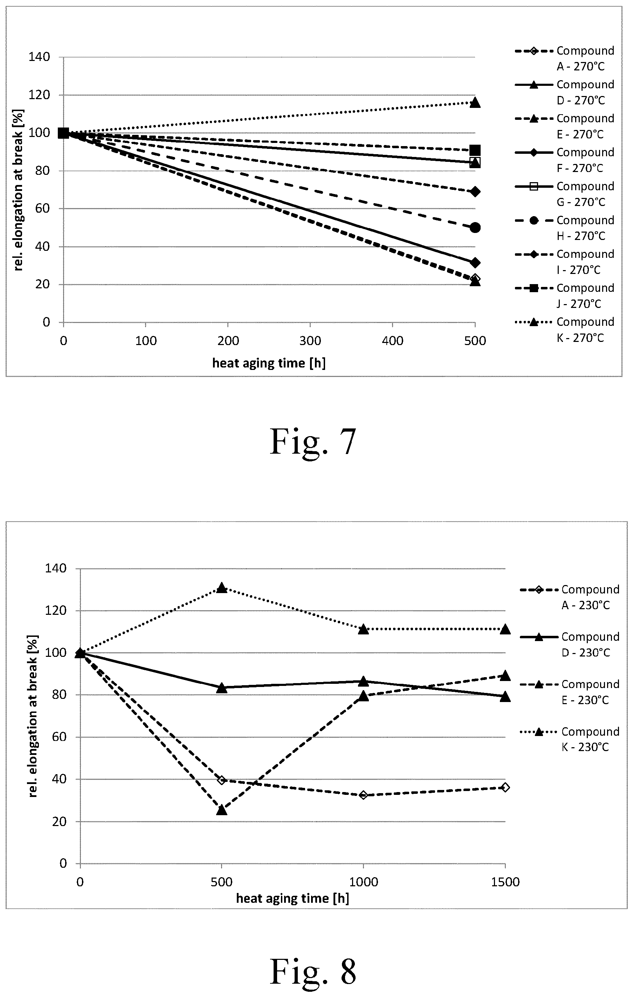

Figures 6 and 7 and Table 5 below show the influence of lanthanum hydroxide amounts on the elongation at break quotient. This was tested at two temperatures: 230°C, 270°C for 500 hours.

In particular, unmodified PEEK (compound A) was compared to PEEK modified with different amounts of lanthanum hydroxide (compounds D to K) for each temperature.

**Table 5**

| Time (hours) | 0 | 500 |
|---|---|---|
| Compound A - 230°C | 100 | 40 |
| Compound D - 230°C | 100 | 83 |
| Compound E - 230°C | 100 | 26 |
| Compound F - 230°C | 100 | 62 |
| Compound G - 230°C | 100 | 77 |
| Compound H - 230°C | 100 | 43 |
| Compound I - 230°C | 100 | 90 |
| Compound J - 230°C | 100 | 97 |
| Compound K - 230°C | 100 | 131 |
| Compound A - 270°C | 100 | 23 |
| Compound D - 270°C | 100 | 84 |
| Compound E - 270°C | 100 | 22 |
| Compound F - 270°C | 100 | 32 |
| Compound G - 270°C | 100 | 84 |
| Compound H - 270°C | 100 | 50 |
| Compound I - 270°C | 100 | 69 |
| Compound J - 270°C | 100 | 91 |
| Compound K - 270°C | 100 | 116 |

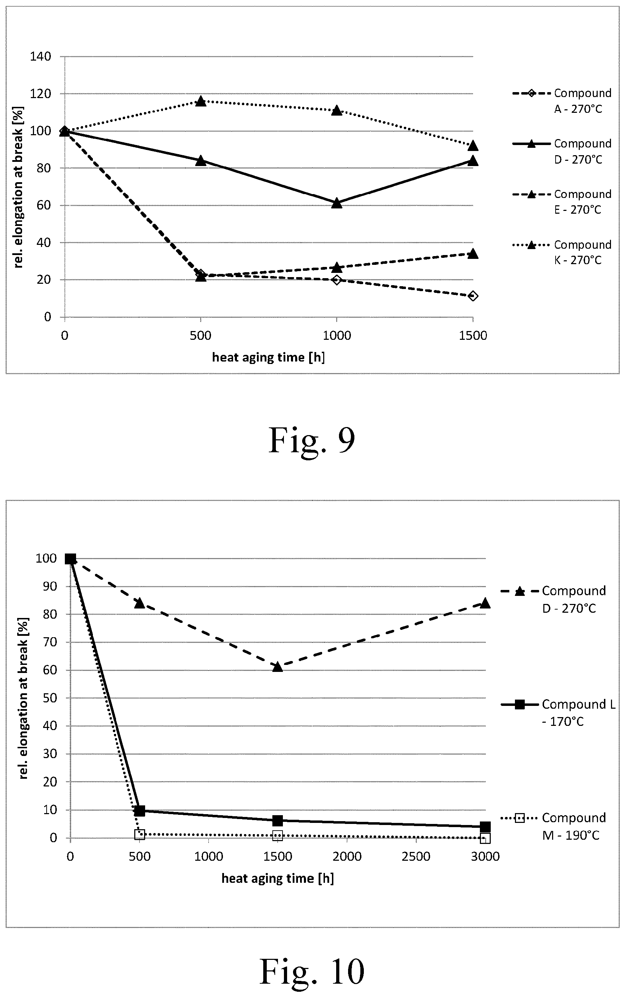

Some of the compounds were also tested for 1500 hours. The results are summarized below in Table 6 and in Figures 8 and 9:

**Table 6**

| Time (hours) | 0 | 1500 |
|---|---|---|
| Compound A - 230°C | 100 | 36 |
| Compound D - 230°C | 100 | 79 |
| Compound E - 230°C | 100 | 89 |
| Compound K - 230°C | 100 | 111 |
| Compound A - 270°C | 100 | 11 |
| Compound D - 270°C | 100 | 84 |
| Compound E - 270°C | 100 | 34 |
| Compound K - 270°C | 100 | 92 |

The results show a stabilizing effect of lanthanum hydroxide in amount between 0.05 wt. % to 5.0 wt.% (compounds D to K) both for 500 hours and up to 1500 hours at 230°C and 270°C compared to unmodified PEEK (compound A).

### Effect on different polymers:

Fig. 10 and Table 7 below show the result of the comparison of the incorporation of lanthanum hydroxide "fine" into PEEK (compound D), into PBT (compound L) and into PA 66 (compound M), respectively, on the basis of the elongation at break quotient. For all polymers, the temperature was slightly above the recommended maximum temperature for continuous use.

It can be seen, that there is a pronounced stabilizing effect of lanthanum hydroxide for PEEK, as compared with PBT (slight stabilization) and PA.

**Table 7**

| Time (hours) | 0 | 500 | 1500 | 3000 |
|---|---|---|---|---|
| Compound D - 270°C | 100 | 84 | 61 | 84 |
| Compound L - 170°C | 100 | 10 | 6 | 4 |
| Compound M - 190°C | 100 | 1 | 1 | 0 |

### Characterisation of lanthanum hydroxide

In the following the test methods for the characterisation of lanthanum hydroxide according to the invention are described. All analyses were performed in duplicate.

### Determination of pH value

A 10 wt.% slurry of lanthanum hydroxide in deionized water was prepared and stirred for 30 min. After that, the pH was measured while stirring using a pH-meter at 20 °C (+/- 1 °C) (type: SevenExcellence from Mettler Toledo).

### Determination of BET surface

Prior to the measurement 1 g lanthanum hydroxide was dried at 250 °C with nitrogen purging for 60 min.

The BET surface was determined with a Tristar 3020 surface and porosity analyser (from Micromeritics) using nitrogen as analysis gas.

### Determination of particle size distribution D₅₀ by laser diffraction method

D represents the diameter of powder particles. D₅₀ is known as median diameter or medium value of the particle size distribution, being the particle diameter at 50 % in the cumulative distribution (e.g. a D₅₀ of 2.0 µm means that 50 % of the particles have a smaller diameter than 2.0 µm).

Lanthanum hydroxide (0,5 g) was introduced into the laser particle size analyser as powder. The sample was also treated by ultrasound at 50 W for 60 s prior to the measurement.

### Determination of Loss on Ignition

The Loss on Ignition (LOI) was determined with a chamber furnace (type: N11HR from Nabertherm) by heating 20 g of lanthanum hydroxide from room temperature to 1000 °C with a hold time at 1000 °C for 2 hours.

## Claims

1. A polyether ether ketone (PEEK) 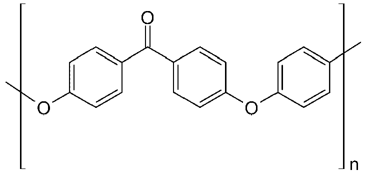 composition containing lanthanum hydroxide.

2. PEEK composition according to claim 1, **characterized in that** the amount of lanthanum hydroxide is from 0.05 wt.% to 5.0 wt.%, more preferably 0.1 wt.% to 5.0 wt.%, most preferred 0.3 wt.% to 0.5 wt.%, e.g. 0.5 wt.%.

3. PEEK composition according to claim 1, **characterized in that** the lanthanum hydroxide has a D₅₀ of 0.5 to 1 µm measured by laser diffraction analysis according to the specification.

4. The use of lanthanum hydroxide for long-term stabilization of a PEEK composition over a period of 500 hours or more, preferably 1000 to 3000 hours or more at a temperature of from 210°C to 300°C, preferably 230°C to 270°C.

## Patentansprüche

1. Eine Polyetheretherketon (PEEK)- 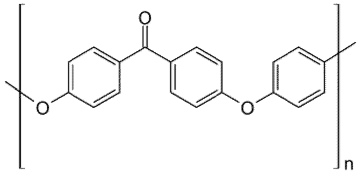 Zusammensetzung, die Lanthanhydroxid enthält.

2. PEEK-Zusammensetzung nach Anspruch 1, **dadurch gekennzeichnet, dass** die Menge an Lanthanhydroxid zwischen 0,05 Gew.-% und 5,0 Gew.-%, vorzugsweise zwischen 0,1 Gew.-% und 5,0 Gew.-%, am bevorzugtesten zwischen 0,3 Gew.-% und 0,5 Gew.-%, z. B. 0,5 Gew.-%, liegt.

3. PEEK-Zusammensetzung nach Anspruch 1, **dadurch gekennzeichnet, dass** das Lanthanhydroxid einen D₅₀ von 0,5 bis 1 µm aufweist, gemessen mittels Laserbeugungsanalyse gemäß der Spezifikation.

4. Verwendung von Lanthanhydroxid zur Langzeitstabilisierung einer PEEK-Zusammensetzung über einen Zeitraum von 500 Stunden oder mehr, vorzugsweise 1000 bis 3000 Stunden oder mehr, bei einer Temperatur von 210 °C bis 300 °C, vorzugsweise 230 °C bis 270 °C.

## Revendications

1. Composition de polyétheréthercétone (PEEK) 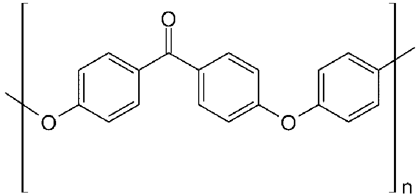 contenant de l'hydroxyde de lanthane.

2. Composition de PEEK selon la revendication 1, **caractérisée en ce que** la quantité en hydroxyde de lanthane est comprise entre 0,05 % en poids et 5,0 % en poids, plus préférablement entre 0,1 % en poids et 5,0 % en poids, idéalement entre 0,3 % en poids et 0,5 % en poids, par exemple de 0,5 % en poids.

3. Composition de PEEK selon la revendication 1, **caractérisée en ce que** l'hydroxyde de lanthane présente un D₅₀ compris entre 0,5 et 1 µm, mesuré par analyse de diffraction laser conformément à la spécification.

4. Utilisation de l'hydroxyde de lanthane pour la stabilisation à long terme d'une composition de PEEK sur une période de 500 heures ou plus, de préférence de 1000 à 3000 heures ou plus, à une température comprise entre 210°C et 300°C, de préférence entre 230°C et 270°C.
